# EUROPÄISCHE PATENTSCHRIFT

(11) **EP 1 270 990 B1**
(45) Veröffentlichungstag und Bekanntmachung des Hinweises auf die Patenterteilung: **14.09.2005**
(21) Anmeldenummer: 02012864.1
(22) Anmeldetag: 11.06.2002
(51) Int. Cl.: F16F 9/54, F16C 11/04

(54) **Befestigungsvorrichtung für einen Linearantrieb**
Fastening device for a linear actuator
Dispositif de fixation pour un actionneur linéaire

(30) Priorität: 27.06.2001 DE 10130932
(43) Veröffentlichungstag der Anmeldung: 02.01.2003
(73) Patentinhaber: DaimlerChrysler AG, 70567 Stuttgart (DE)
(72) Erfinder: Amrhein, Frank, 71069 Sindelfingen (DE); Schenk, Bernhard, 71034 Böblingen (DE)

(56) Entgegenhaltungen:
- FR-A- 2 734 521
- US-A- 1 632 116
- US-A- 3 462 179

## Beschreibung

Die vorliegende Erfindung betrifft eine Befestigungsvorrichtung zur schwenkbeweglichen Festlegung eines Endes eines axiale Zug- und/oder Druckkräfte übertragenden Linearantriebs, z.B. Hydraulikzylinder, Pneumatikzylinder, Gasfeder, an einem Trägerteil, mit den Merkmalen des Oberbegriffs des Anspruchs 1.

Aus der DE 32 28 674 A1 ist eine Befestigungsvorrichtung dieser Art für eine Gasfeder bekannt, die eine am Gasfederende angeordnete erste Befestigungshälfte und eine am Trägerteil angeordnete zweite Befestigungshälfte besitzt. Die erste Befestigungshälfte weist einen sich quer zur Kraftübertragungsrichtung erstreckenden Bolzen auf, der zwei zueinander parallele ebene Außenflächen besitzt, die an zwei gegenüberliegenden Seiten des Bolzens ausgebildet sind und sich parallel zur Bolzenachse und parallel zur Kraftübertragungsrichtung der Gasfeder erstrecken. Die zweite Befestigungshälfte besitzt eine zylindrische Bolzenaufnahme, die in einer Einsteckrichtung eine radiale Bolzeneinstecköffnung aufweist. Der Bolzen ist in einer Montagelage der Gasfeder, die gegenüber einer Funktionslage der Gasfeder um 90° geneigt ist, mit parallel zur Einsteckrichtung ausgerichteten Außenflächen durch die Bolzeneinstecköffnung in die Bolzenaufnahme einsteckbar. Die Gasfeder ist bei in die Bolzenaufnahme eingestecktem Bolzen um die Bolzenachse um 90° in ihre Funktionslage verschwenkbar.

Bei dieser bekannten Befestigungsvorrichtung ist der Bolzen als separates Bauteil ausgebildet, das am Gasfederende angebaut ist. Hierbei durchdringt ein Gewindeabschnitt des Gasfederendes den Bolzen in der Kraftübertragungsrichtung der Gasfeder. Dementsprechend benötigt die bekannte Befestigungsvorrichtung einen relativ großen Abstand zwischen Bolzenaufnahme und Trägerteil, um Kollisionen zwischen Gasfederende und Trägerteil bei der Montage zu vermeiden.

Aus der DE 43 41 436 C1 ist eine weitere Befestigungsvorrichtung für eine Gasdruckfeder bekannt, bei der das Gasdruckfederende dadurch an einem Trägerteil festgelegt wird, daß ihr mit einem Bolzen versehene Ende in der Kraftübertragungsrichtung der Gasdruckfeder in eine Lageraufnahme eingesteckt wird und daß anschließend die Gasdruckfeder um die Achse ihrer Kraftübertragungsrichtung um 90° in ihre Funktionslage gedreht wird. Auch bei dieser Befestigungsvorrichtung ist der Bolzen als separates Bauteil ausgebildet, das am Gasdruckfederende angebaut ist, wobei ein axiales Ende der Gasdruckfeder in der Kraftübertragungsrichtung über dem Bolzen vorsteht. Dementsprechend wird auch hier ein relativ großer Abstand zwischen der Lageraufnahme und dem Trägerteil benötigt, um die Gasdruckfeder montieren zu können.

Weiterhin offenbart das Dokument US 3462 179-A- eine Befestigungsvorrichtung gemäß dem kenngeichenden Teil des Anspruchs 1.

Die vorliegende Erfindung beschäftigt sich mit dem Problem, für eine Befestigungsvorrichtung der eingangs genannten Art eine Ausführungsform anzugeben, die auch bei sehr engen Einbauverhältnissen verwendbar ist.

Dieses Problem wird erfindungsgemäß durch eine Befestigungsvorrichtung mit den Merkmalen des Anspruchs 1 gelöst.

Die Erfindung beruht auf dem allgemeinen Gedanken, den Bolzen durch die Basis eines U-Profilstücks oder durch einen abstehenden Schenkel eines L-Profilstücks zu bilden, wobei das jeweilige Profilstück am Linearantriebsende oder am Trägerteil ausgebildet ist. Sofern der Linearantrieb mit diesem Profilstück ausgestattet ist, bildet die U-Basis oder der abstehende Schenkel bzw. der Bolzen das axiale Ende des Linearantriebs, ohne daß weitere Bestandteile des Linearantriebs über den Bolzen vorstehen müssen. Dementsprechend kann der Abstand zwischen Bolzenaufnahme und Trägerteil relativ klein gewählt werden. Insgesamt kann somit ein Einbau bei besonders beengten Raumverhältnissen realisiert werden.

Während bei einem L-Profilstück Sicherungsmittel vorgesehen sein können, die ein Herausziehen des Bolzens aus der Bolzenaufnahme in Bolzenlängsrichtung verhindern, sind derartige Sicherungsmittel bei einem U-Profilstück nicht erforderlich, da dort die Sicherung durch die beiden U-Schenkel gebildet ist.

Bei einer besonderen Weiterbildung können sich die Außenflächen des Bolzens zumindest in der Funktionslage des Linearantriebs quer zur Kraftübertragungsrichtung erstrecken. Durch diese Ausrichtung der Außenflächen des Bolzens wird die Erzielung eines kleinen Abstandes zwischen der Bolzenaufnahme und dem damit ausgestatteten Element unterstützt, da beim Bolzen der Abstand zwischen seinen Außenflächen kleiner ist als sein Durchmesser.

Bei einer anderen vorteilhaften Ausführungsform kann die andere Befestigungshälfte als C-Profilstück ausgebildet sein, dessen C-Öffnung die Bolzeneinstecköffnung bildet. Auch ein derartiges C-Profilstück baut relativ klein und unterstützt somit die Verwendung der Befestigungsvorrichtung bei beengten Einbauverhältnissen.

Bei einer anderen Ausführungsform kann die Einsteckrichtung so orientiert sein, daß der Linearantrieb in seiner Montagelage um weniger als 90° oder um weniger als 60° oder um etwa 45° geneigt zu seiner Funktionslage verläuft. Durch diese besondere Ausgestaltung wird die Montierbarkeit des Linearantriebs bei beengten Raumverhältnissen vereinfacht, da der Linearantrieb zum Verschwenken in seine Funktionslage weniger Freiraum benötigt.

Die erfindungsgemäßen Vorteile wirken sich dann besonders deutlich aus, wenn das U-Profilstück oder das L-Profilstück am Linearantriebsende ausgebildet ist. Ebenso ist es möglich, das jeweilige Profilstück am Trägerteil auszubilden.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen, jeweils schematisch,
- Fig. 1: einen Längsschnitt durch eine Befestigungsvorrichtung nach der Erfindung,
- Fig. 2: einen Längsschnitt durch die Befestigungsvorrichtung entsprechend den Schnittlinien II in Fig. 1 bei einer Montagelage eines Linearantriebs und
- Fig. 3: eine Schnittansicht wie in Fig. 2, jedoch bei einer Funktionslage des Linearantriebs.

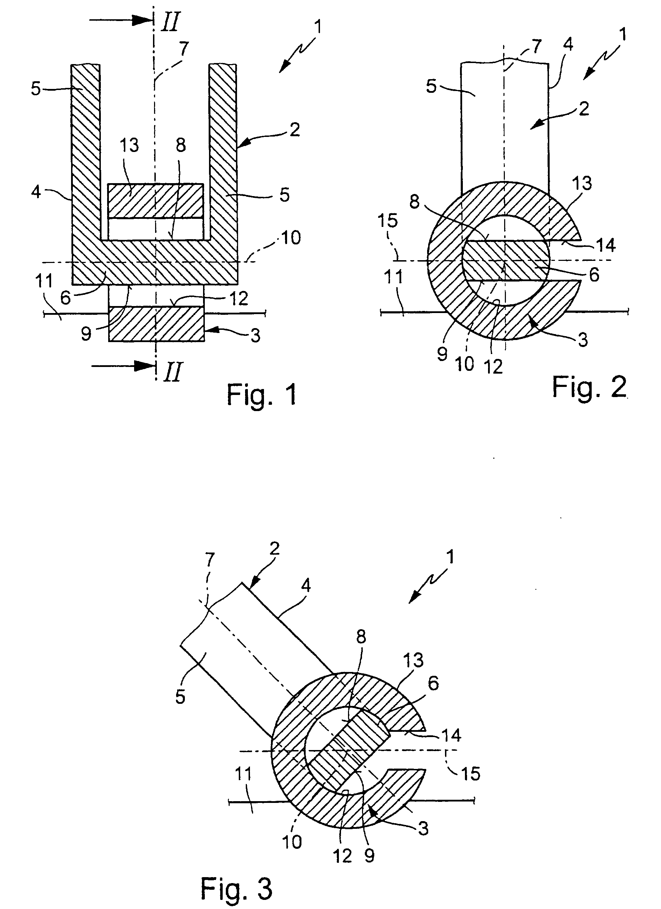

Entsprechend Fig. 1 weist eine erfindungsgemäße Befestigungsvorrichtung 1 eine erste Befestigungshälfte 2 auf, die mit einer zweiten Befestigungshälfte 3 zusammenwirkt. Die erste Befestigungshälfte 2 ist an einem axialen Ende eines im übrigen nicht dargestellten Linearantriebs ausgebildet, der beispielsweise durch einen Hydraulikzylinder oder durch einen Pneumatikzylinder oder durch eine Gasfeder oder Gasdruckfeder gebildet ist. Das hier gezeigte Ende des Linearantriebs ist in Form eines U-Profilstücks 4 ausgestaltet, das zwei zueinander parallel verlaufende U-Schenkel 5 aufweist, die durch eine U-Basis 6 miteinander verbunden sind. Diese U-Basis 6 bildet bei der erfindungsgemäßen Befestigungsvorrichtung einen Bolzen, der im folgenden ebenfalls mit 6 bezeichnet wird. Dieser Bolzen 6 erstreckt sich quer zu einer Kraftübertragungsrichtung 7 des Linearantriebs, die mit dessen Längsachse zusammenfällt. Der Bolzen 6 weist auf einer dem Linearantrieb zugewandten Seite eine erste ebene Außenfläche 8 sowie auf einer vom Linearantrieb abgewandten Seite eine zweite ebene Außenfläche 9 auf. Die beiden Außenflächen 8 und 9 verlaufen parallel zueinander und sind einander gegenüberliegend am Bolzen 6 ausgebildet. Des weiteren erstrecken sich die beiden Außenflächen 8 und 9 parallel zu einer Bolzenachse 10 sowie quer zur Kraftübertragungsrichtung 7.

Die zweite Befestigungshälfte 3 ist an einem nur andeutungsweise dargestellten Trägerteil 11 ausgebildet, an dem der Linearantrieb schwenkbeweglich festzulegen ist. Insbesondere kann dieses Trägerteil 11 einen Bestandteil eines Kraftfahrzeugs bilden. Die zweite Befestigungshälfte 3 enthält eine zylindrische Bolzenaufnahme 12, deren Zylinderachse koaxial zur Bolzenachse 10 verläuft. In dieser Bolzenaufnahme 12 ist der Bolzen 8 schwenkbeweglich gelagert.

Entsprechend den Fig. 2 und 3 ist die zweite Befestigungshälfte 3 bei der hier gezeigten besonderen Ausführungsform durch ein C-Profilstück 13 gebildet, das fest am Trägerteil 11 verankert ist. Beispielsweise ist das C-Profilstück 13 an das Trägerteil 11 angeschweißt; ebenso sind andere Befestigungsmaßnahmen sowie eine einstückige Herstellung mit dem Trägerteil 11 möglich.

Das C-Profilstück 13 besitzt eine C-Öffnung 14, die eine radiale Bolzeneinstecköffnung bildet, durch die der Bolzen 6 in einer Einsteckrichtung 15 in die Bolzenaufnahme 12 einsteckbar ist.

Aus den Fig. 2 und 3 geht hervor, daß der Bolzen 6 zwischen seinen Außenflächen 8 und 9 eine zylindrische Außenkontur aufweist, die zur zylindrischen Innenkontur der Bolzenaufnahme 12 korrespondiert. Auf diese Weise ist der in die Bolzenaufnahme 12 eingesteckte Bolzen 6 um seine Bolzenachse 10 schwenkbar gelagert. Ein senkrechter Abstand zwischen den beiden Außenflächen 8 und 9 ist dadurch zwangsläufig deutlich kleiner als der Durchmesser des Bolzens 6. Die lichte Weite der Bolzeneinstecköffnung 14 (C-Öffnung 14) ist zweckmäßig geringfügig größer ausgebildet als der Abstand zwischen den beiden Außenflächen 8 und 9, um so das Einstecken des Bolzens 6 in die Bolzenaufnahme 12 zu ermöglichen.

In Fig. 2 nimmt der Linearantrieb eine Montagelage ein, in welcher der Bolzen 6 mit parallel zur Einsteckrichtung 15 ausgerichteten Außenflächen 8 und 9 durch die Bolzeneinstecköffnung 14 in die Bolzenaufnahme 12 einsteckbar ist. Nach dem Einstecken des Bolzens 6 in die Bolzenaufnahme 12 wird der Linearantrieb um die Bolzenachse 10 in eine in Fig. 3 dargestellte Funktionslage verschwenkt. Diese Funktionslage ist in der hier gezeigten Ausführungsform etwa um 45° gegenüber der Montagelage geneigt. Durch diese Anordnung der Bolzeneinstecköffnung 14 wird gewährleistet, daß sich der Bolzen 6 im Betriebs des Linearantriebs nicht selbsttätig aus seiner Bolzenaufnahme 12 entfernen kann.

Wie aus den Fig. 2 und 3 besonders deutlich wird, kann bei der erfindungsgemäßen Befestigungsvorrichtung 1 ein Abstand zwischen dem Bolzen 6 und dem Trägerteil 11 sehr klein gewählt werden. Insbesondere aus Fig. 3 geht hervor, daß der Bolzen 6 mit einer Ecke in der Funktionslage des Linearantriebs innerhalb der Bolzenaufnahme 12 bis zum Niveau des Trägerteils 11 abgesenkt sein kann; ebenso ist es möglich, die Bolzenaufnahme 12 so anzuordnen, daß der Bolzen 12 unterhalb seiner Bolzenachse 10 teilweise unter das Niveau des Trägerteils 11 eintaucht. Dementsprechend benötigt die erfindungsgemäße Befestigungsvorrichtung 1 extrem wenig Bauraum. Des weiteren benötigt die erfindungsgemäße Befestigungsvorrichtung 1 auch für ihre Montage sowie für ihre Demontage vergleichweise wenig Einbauraum, so daß sie relativ einfach montierbar bzw. demontierbar ist.

Diese minimalen Raumanforderungen werden unter anderem dadurch ermöglicht, daß der Bolzen 6 durch die U-Basis 6 des U-Profilstücks 2 gebildet ist, der zwischen den U-Schenkeln 4 und 5 an seinen axialen Enden ausgebildet ist. Hierdurch kann jede in Achsrichtung des Linearantriebs über den Bolzen 6 vorstehende Störkontur vermieden werden, so daß das Linearantriebsende sehr dicht am Trägerteil 11 schwenkbeweglich festlegbar ist.

Bei einer nicht gezeigten alternativen Ausführungsform kann anstelle des U-Profilstücks 4 ein L-Profilstück verwendet werden, bei dem dann der eine Schenkel am linearantriebsende angeordnet ist, während der andere Schenkel frei endet und den Bolzen bildet. An letzterem Schenkel können dann zusätzlich Sicherungsmittel, wie z.B. ein Splint, eine Schraube, eine Mutter, eine Klemmscheibe, angebracht sein, die radial am Bolzen abstehen, um so ein ungewolltes Herausziehen des Bolzens in Bolzenlängsrichtung aus der Bolzenaufnahme 12 zu verhindern.

## Patentansprüche

1. Befestigungsvorrichtung zur schwenkbeweglichen Festlegung eines Endes eines axiale Zug- und/oder Druckkräfte übertragenden Linearantriebs, z.B. Hydraulikzylinder, Pneumatikzylinder, Gasfeder, an einem Trägerteil (11),
- mit einer am Linearantriebsende angeordneten ersten Befestigungshälfte (12) und einer am Trägerteil (11) angeordneten zweiten Befestigungshälfte (3),
- wobei die eine Befestigungshälfte (2) einen sich quer zur Kraftübertragungsrichtung (7) erstreckenden Bolzen (6) aufweist, der zwei zueinander parallele ebene Außenflächen (8,9) aufweist, die an zwei gegenüberliegenden Seiten des Bolzens (6) ausgebildet sind und sich parallel zur Bolzenachse (10) erstrecken,
- wobei die andere Befestigungshälfte (3) eine zylindrische Bolzenaufnahme (12) aufweist, die in einer Einsteckrichtung (15) eine radiale Bolzeneinstecköffnung (14) aufweist,
- wobei der Bolzen (6) in einer Montagelage des Linearantriebs, die gegenüber einer Funktionslage des Linearantriebs geneigt ist, mit parallel zur Einsteckrichtung (15) ausgerichteten Außenflächen (8,9) durch die Bolzeneinstecköffnung (14) in die Bolzenaufnahme (12) einsteckbar ist,
- wobei der Linearantrieb bei in die Bolzenaufnahme (12) eingestecktem Bolzen (6) um die Bolzenachse (10) in seine Funktionslage verschwenkbar ist,
- wobei die eine Befestigungshälfte (2) als U-Profilstück (4), dessen U-Schenkel (5) über eine den Bolzen (6) bildende U-Basis miteinander verbunden sind, oder als L-Profilstück mit einem den Bolzen (6) bildenden Schenkel ausgebildet ist,
**dadurch gekennzeichnet ,**
**dass** sich die Außenflächen (8,9) des Bolzens (6) zumindest in der Funktionslage des Linearantriebs quer zur Kraftübertragungsrichtung (7) erstrecken.

2. Befestigungsvorrichtung nach Anspruch 1,
**dadurch gekennzeichnet ,**
**dass** bei als L-Profilstück ausgebildeter Befestigungshälfte (2) Sicherungsmittel vorgesehen sind, die den Bolzen (6) in seiner Ausrichtung gegen ein Herausziehen aus der Bolzenaufnahme (12) sichern.

3. Befestigungsvorrichtung nach Anspruch 2,
**dadurch gekennzeichnet ,**
**dass** die Sicherungsmittel an dem den Bolzen (6) bildenden Schenkel angebracht sind.

4. Befestigungsvorrichtung nach einem der Ansprüche 1 bis 3,
**dadurch gekennzeichnet ,**
**dass** die andere Befestigungshälfte (3) als C-Profilstück (13) ausgebildet ist, dessen C-Öffnung die Bolzeneinstecköffnung (14) bildet.

5. Befestigungsvorrichtung nach einem der Ansprüche 1 bis 4,
**dadurch gekennzeichnet ,**
**dass** die Einsteckrichtung (15) so orientiert ist, dass der Linearantrieb in seiner Montagelage um weniger als 90° oder um weniger als 60° oder um etwa 45° geneigt zu seiner Funktionslage verläuft.

6. Befestigungsvorrichtung nach einem der Ansprüche 1 bis 5,
**dadurch gekennzeichnet ,**
**dass** das U-Profilstück (4) oder das L-Profilstück am Linearantriebsende ausgebildet ist.

7. Befestigungsvorrichtung nach einem der Ansprüche 1 bis 6,
**dadurch gekennzeichnet ,**
**dass** das U-Profilstück (4) oder das L-Profilstück am Trägerteil (11) ausgebildet ist.

## Claims

1. Fixing device for fixing in a pivotably movable manner an end of a linear drive transmitting axial tensile forces and / or compressive forces, e.g. hydraulic cylinder, pneumatic cylinder, gas spring, to a support member (11),
- having a first fixing half (12) arranged at the end of the linear drive and a second fixing half (3) arranged on the support member (11),
- wherein one fixing half (2) has a bolt member (6) extending transverse to the direction of force transmission (7), said bolt member having two even outer areas (8, 9) which are parallel to each other and are formed on two opposing sides of the bolt member (6) and extend parallel to the axis of the bolt member (10),
- wherein the other fixing half (3) has a cylindrical bolt receiving member (12) which has a radial bolt member insertion opening (14) in an insertion direction,
- wherein the bolt member (6), in an assembly position of the liner drive which is inclined in relation to a functional position of the linear drive, with outer areas (8, 9) extending parallel to the insertion direction can be inserted through the bolt member insertion opening (14) into the bolt receiving member (12),
- wherein when the bolt member (6) is inserted in the bolt receiving member (12) the linear drive can be pivoted about the axis of the bolt member into its functional position,
- wherein one fixing half (2) is formed as a U-profiled part (4) whose U portions are connected to each other by means of a U-shaped base forming the bolt member (6) or. as an L-profiled part having a portion forming the bolt member (6),
**characterised in that**
the outer areas (8, 9) of the bolt member (6) extend transverse to the force transmission direction (7) at least in the functional position of the linear drive.

2. Fixing device according to Claim 1,
**characterised in that**
when a fixing half (2) is formed as an L-profiled part securing means are provided which secure the bolt member (6) in its direction against disengagement from the bolt receiving member (12).

3. Fixing device according to Claim 2,
**characterised in that**
the securing means are arranged on the portion forming the bolt member (6).

4. Fixing device according to one of the Claims 1 to 3,
**characterised in that**
the other fixing half (3) is formed as a C-profiled part (13) whose C opening forms the bolt member insertion opening (14).

5. Fixing device according to one of the Claims 1 to 4,
**characterised in that**
the insertion direction (15) is oriented so that the linear drive in its assembly position is inclined by less than 90° or by less than 60° or by about 45° relative to its functional position.

6. Fixing device according to one of the Claims 1 to 5,
**characterised in that**
the U-profiled part (4) or the L-profiled part is formed at the end of the linear drive.

7. Fixing device according to one of the Claims 1 to 6,
**characterised in that**
the U-profiled part (4) or the L-profiled part is formed on the support member (11).

## Revendications

1. Dispositif de fixation d'une extrémité d'un système d'entraînement linéaire, tel qu'un vérin hydraulique, un vérin pneumatique, un amortisseur à gaz comprimé, transmettant des forces axiales de traction et/ou de pression, destinée à être fixée mobile à pivotement sur un élément de support (11),
- comportant une première moitié de fixation (2) agencée au niveau de l'extrémité du système d'entraînement linéaire, et une deuxième moitié de fixation (3) agencée sur l'élément de support (11),
- l'une des moitiés de fixation (2) comportant un tourillon (6), qui est orienté transversalement à la direction de transmission des forces (7) et qui comporte deux faces extérieures (8, 9) planes et parallèles, qui sont réalisées sur deux côtés face à face du tourillon (6) et s'étendent parallèlement à l'axe du tourillon (10),
- l'autre moitié de fixation (3) comportant un logement pour tourillon (12) cylindrique qui, dans une direction d'introduction (15), comporte un orifice d'introduction (14) radial pour le tourillon,
- le tourillon (6) pouvant être introduit avec des faces extérieures (8, 9), orientées parallèlement à la direction d'introduction (15), dans le logement pour tourillon (12) en passant par l'orifice d'introduction (14), lorsque le système d'entraînement linéaire est dans une position de montage inclinée par rapport à une position fonctionnelle du système d'entraînement linéaire,
- le système d'entraînement linéaire pouvant pivoter autour de l'axe du tourillon (10) vers sa position fonctionnelle lorsque le tourillon (6) est enfiché dans le logement (12),
- l'une des moitiés de fixation (2) étant réalisée sous la forme d'un profil en U (4), dont les branches du U (5) sont reliées entre elles par une base du U formant le tourillon (6), ou sous la forme d'un profil en L dont une branche forme le tourillon (6),
**caractérisé en ce que** les faces extérieures (8, 9) du tourillon (6), au moins dans la position fonctionnelle du système d'entraînement linéaire, sont orientées transversalement à la direction de transmission des forces (7).

2. Dispositif de fixation selon la revendication 1, **caractérisé en ce que**, dans le cas où la moitié de fixation (2) est réalisée sous la forme d'un profil en L, il est prévu des moyens de blocage qui bloquent le tourillon (6) dans sa direction opposée à une extraction hors du logement pour tourillon (12).

3. Dispositif de fixation selon la revendication 2, **caractérisé en ce que** les moyens de blocage sont agencés sur la branche formant le tourillon (6).

4. Dispositif de fixation selon l'une quelconque des revendications 1 à 3, **caractérisé en ce que** l'autre moitié de fixation (3) est réalisée sous la forme d'un profil en C (13), dont l'ouverture du C forme l'ouverture d'introduction (14) pour le tourillon.

5. Dispositif de fixation selon l'une quelconque des revendications 1 à 4, **caractérisé en ce que** la direction d'introduction (15) est orientée de telle sorte que le système d'entraînement linéaire dans sa position de montage est incliné de moins de 90° ou de moins de 60° ou de 45° environ par rapport à sa position fonctionnelle.

6. Dispositif de fixation selon l'une quelconque des revendications 1 à 5, **caractérisé en ce que** la partie avec un profil en U (4) ou la partie avec un profil en L est réalisée au niveau de l'extrémité du système d'entraînement linéaire.

7. Dispositif de fixation selon l'une quelconque des revendications 1 à 6, **caractérisé en ce que** la partie avec un profil en U (4) ou la partie avec un profil en L est réalisée au niveau de l'élément de support (11).
